# EUROPEAN PATENT APPLICATION

(11) **EP 4 108 332 A1**
(43) Date of publication of application: **28.12.2022**
(21) Application number: 22178600.7
(22) Date of filing: 13.06.2022
(51) Int. Cl.: B01L 3/00, B01L 3/02, G01N 1/44, B01L 7/00, C12Q 1/6806, H05B 6/12

(54) **DEVICE FOR HEATING OF SAMPLES**

(30) Priority: 24.06.2021 LU 102833
(71) Applicant: Stratec SE, 75217 Birkenfeld (DE)
(72) Inventor: Retzlaff, Rüdiger, 75217 Birkenfeld (DE)
(74) Representative: Tegethoff, Sebastian

(57) **Abstract**

The invention relates to a container for the heating of samples and a system comprising such a container and provides a container for processing samples, wherein the container is made of a material comprising electrically conductive particles.

## Description

### Field of the Invention

The invention relates to a device for the heating of samples and a system comprising such devices.

### Brief description of the related art

Automated analyser systems for use in clinical diagnostics and life sciences are produced by a number of companies. For example, STRATEC^{®} SE, Birkenfeld, Germany, produces a number of devices for specimen handling and detection for use in automated analyser systems and other laboratory instrumentation.

Samples which will be analysed in said automated analyser systems will usually be stored in container like tubes or vials. In certain assays it is necessary to raise the temperature in a sample in order to allow biochemical reactions. One example for repeating cycles of heating and cooling of a sample is the polymerase chain reaction (PCR) for amplifying nucleotide sequences. Thus, depending on the application or assay that is to be applied to a sample, several transitions in the energy supply to the sample material will have to be performed. Depending on the design and manufacturing quality of the sample material like tubes or vials, the energy transfer will occur to a greater or lesser extent (e.g. air gap at the transition between a heating element and a cuvette). This can lead to deviations in the intended and often required target temperature in the sample material, as it is usually not possible to measure the sample temperature itself with available means and it is usually not possible to insert a temperature sensor into the sample.

Likewise, if the control parameters are not optimally adjusted, an overshooting temperature may occur, i.e. heating beyond the target temperature. In many biochemical assays there are very narrow tolerances given regarding a required temperature. The laboratory equipment has to allow to heat or cool a sample to a defined temperature quickly and precisely. This process of changing the temperature of a sample usually takes place in incubators or thermal cyclers. Energy is transferred to the container storing the sample to be assayed like cuvettes or microtiter plates via a direct thermal contact or indirect via radiation or convection.

The heating of samples or the container comprising the sample is in certain embodiments achieved using resistive components such as heating foils or heating resistors or with the aid of Peltier elements or also via IR radiation emitters like halogen lamps for instance.

Disadvantages of solutions known from the prior art relate for instance to a low energy transfer due to air gaps between a heating element and a container. The thermal mass of a heating element has also to be taken into consideration, because the heating element must also be heated prior to be able to transfer heat so that a defined amount of a higher energy will be required depending on the mass of the respective heating element. Thus, the heating energy for each device will have to be adapted to the respective thermal mass of a heating element. It is a further disadvantage that heating times will be longer, because the respective heating element will have to be heated prior to heating a sample which is located in a container that is placed into a heating element.

Published U.S. application US 2002/179590 A1 discloses a microtiter plate system includes an integral heater. In an embodiment, the integral heater includes a heater plate. In another embodiment, the integral heater includes resistive heater wires positioned beneath and/or between the wells of a microtiter plate. In an embodiment, the microtiter plate system includes optically clear well bottoms that permit sensing and measurement of samples through the optically clear well bottoms. In an implementation, an optically clear heater is positioned beneath the optically clear well bottoms. In an alternative implementation, resistive heater wires are positioned between the wells. In an embodiment, the microtiter plate system includes a microtiter plate lid with an integral heater, which can be implemented using a heater plate, resistive wires, and the like. In an embodiment, the microtiter plate system includes an integral non-contact heater, such as a ferrous plate and/or ferrous particles, powder and/or fibers, which generate heat when subjected to an electromagnetic field. An electromagnetic field can be generated by an inductive coil or the like. In an embodiment, the microtiter plate system includes an integral non-contact heater which generates heat when subjected to microwave radiation from a microwave generator. In an embodiment, the microtiter plate system includes an integral thermostat that maintains a substantially constant temperature in the microtiter plate system. It is disadvantages that the systems according to this document are based on solid heater plates or heater wires.

Published International application WO 03/000419 A2 relates to a sample well plate, having an array of sample wells formed therein, which has its underside surfaces coated with a highly reflective coating, including the outer surfaces of the sample wells. The coating is preferably formed from metal, for example silver or nickel. The sample well plate is formed of a light transmissive material to ensure the full benefit of the reflectivity of the coating. The coating provides substantial increases in reflectivity compared with prior art sample well plates. It is disadvantages that the sample well plate according to this document relates to a reflective coating so that the wells are not available for viewing from all sides.

Published U.S. application US 2012/164746 A1 teaches a biological material fixed region enclosing tip, a biological material fixed region treatment apparatus, and a treatment method thereof. The biological material fixed region enclosing tip comprises: a tip form vessel having an installation opening part that is installable to a nozzle that performs suction and discharge of gas, and an opening through which inflow and outflow of fluid is possible by means of the suction and discharge of gas; a fixing region provided in the tip form vessel, in which a predetermined biological material is fixed or fixable in a plurality of different positions that are determined beforehand that are distinguishable from the exterior; and an enclosing section that encloses the fixing region within the tip form vessel such that the fixing region is able to make contact in an immovable state with the fluid that has flown into the tip form vessel from the opening. This document relates to the use of an electroconductive member which requires connection to an electrical circuit.

Published U.S. application US 2018/136246 A1 relates to induction heating which can be used to facilitate reactions within biological samples. A sample container can be placed in a magnetic field from an induction coil to generate heat. An exemplary sample container can include an electrically insulative outer wall surrounding an interior space for containing a biological sample and a heating element within the interior space, the heating element comprising an electrically conductive portion. In use, the sample container can be received within a receptacle that includes the induction coil. The induction coil is operated to induce a current in the heating element of the sample container until the biological sample reaches a target temperature. It is disadvantages that the sample container according to this document comprises a separate solid inductive core for heating.

Published U.S. application US 2007/012683 A1 relates to a device that comprises one or more fluid retainment regions each having at least one wall, and one or more loops in heat-transfer communication with the at least one wall. Each of the loops can comprise an electrical conductor that surrounds the same or a different fluid retainment region. A device is provided that comprises one or more fluid retainment regions each having particulates disposed therein. A system is provided that includes a platen adapted to hold a device including fluid retainment regions and one or more electrical conductors in heat-transfer communication with the fluid retainment regions. Methods of heating a sample are also provided. It is disadvantages that the device according to this document comprises a separate solid inductive material or layer for heating.

Taking the above considerations into account, it is obvious that an overshooting of the temperature is difficult to avoid and is related to an increased efforts and costs. Solutions from the prior art do not allow to measure the temperature of the sample directly by using a sensor in a sample for instance.

### Object of the Invention

It is therefore the object of this invention to provide a device and a method for heating of samples and a system comprising such devices.

### Summary of the Invention

The present invention provides a container for processing samples, wherein the container is made of a material comprising electrically conductive particles.

The container according to the present disclosure can be a tube, a vessel, a pipette tip, a plate with multiple recesses, a microfluidic device or a bottle.

In a further embodiment of the present invention, the electrically conductive particles are beads of a magnetic metal.

Another object of the present invention relates to a system for processing samples, comprising
- a container as described above; and
- an inductor configured for applying a changing magnetic field to the container.

The system may refer in another aspect to comprising an element for accommodating the container, like a rack.

In another embodiment of a system according to the present disclosure, the element for accommodating the container can be a pipette tip or a rack.

It is also intended to provide an embodiment, comprising a plurality of container.

Another aspect of the present invention refers to a system, wherein each container from the plurality of container is arranged next to an inductor.

The system can be a pipettor.

The present disclosure encompasses further a system which a thermocycler.

Another object of the present disclosure relates to a method for heating of a sample in a container, comprising the steps of applying a sample to a container as described above; applying the container in an inductor configured for applying a changing magnetic field to the container; and heating of the sample in the container bey applying the changing magnetic field to the container comprising the sample.

Still other aspects, features, and advantages of the present invention are readily apparent from the following detailed description, simply by illustrating preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### Brief description of the drawings

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 shows a container comprising an electrical conductor.
FIG. 2 shows different types of container.
FIG. 3 shows a container arranged above of an inductor.
FIG. 4 shows several container arranged in a rack.
FIG. 5 shows a pipette tip mounted to a pipette.

### Detailed Description of the Invention

The technical problem is solved by the independent claims. The dependent claims cover further specific embodiments of the invention.

The term container refers within the meaning of the present disclosure to any receptacle or enclosure that is suitable for receiving a material or sample like fluids, liquids, gases or solids or mixtures thereof.

The invention relates to induction heating of a container like cuvettes (single or multiple), planar disks, disposable tips or other geometries, as well as of machined parts made with materials which are produced for such purposes. Induction heating requires a changing magnetic filed and electrically conductive material that is placed into the magnetic field. In an embodiment of the present disclosure is intended to add magnetic particles for instance to the material for manufacturing of the container.

In contrast to solutions known from the prior art, the container according to the present invention does not comprise a solid part like a heater plate, heater wires or a surrounding coating. The material of the container comprises electrically conductive particles so that the container remains transparent or translucent while it is possible to heat the container by applying a changing magnetic field.

There are no heating elements present in a container according to the present invention which require an electrical connection. Thus, the container according to the present invention can be moved without the need to take care for appropriate electrical connectors to be present.

The electrically conductive material is according to the present invention an inseparable part of the material for manufacturing the container. The technical effect is that the container remains transparent and can be freely moved while allowing its heating when applied to a changing magnetic field.

A container according to the present disclosure can be used in laboratory devices like automated analyser system which may be used for diagnostic purposes providing means for inductive heating. The component which is to be heated (usually the container/reaction vessel is present in the form of microtiter plates, cuvettes, microfluidic chips, etc) will have to made of a material comprising particles suitable for induction. In particular, the present disclosure refers to magnetic particles or beads which are embedded in the material of the respective container. The material that can be used for induction is added to the injection moulding granulate for instance so that the component acquires additional functionality. For heating, a component made of such a material will only have to be exposed to an alternating magnetic field.

Particles can be quickly and efficiently heated after applying an electromagnetic field by manufacturing particles suitable for inductive heating by adding an appropriate material to a moldable granulate followed by molding, e.g. in a form for a cuvette or a disposable tip. During application of a magnetic field when performing an assay, the particles transfer their induced heat energy to the plastic material, e.g. the cuvette and subsequently to the sample which is located within the container.

It is an advantage that magnetic particles can be mixed with different materials like cyclic olefin copolymers, polyethylene, polypropylene, polyvinyl chloride or poly urethane so that they are part of a container, e.g. a consumable which can be a tube or well for taking up a liquid.

The magnetic particles may also be added to a sample that is comprised in a container. which will then further be processed in an automatic analyser system like a diagnostic analyser. The magnetic particle can be coated to avoid any unintended chemical interaction between the magnetic particles and a material like a liquid that is comprised or added to the container. Depending on the respective application a coating of the magnetic particles will be required. The coating can be adapted to specific requirements regarding the chemical properties of components or compounds that will be used and get in contact with the magnetic particles.

By setting the specific Curie temperature of the magnetic particles, the maximum temperature of the component, e.g. cuvette, can be set. This would allow rapid heating to the required target temperature without exceeding it. The Curie point defines the temperature above which the influence of an alternating magnetic field no longer leads to a further heating so that over an overshooting of the temperature is avoided.

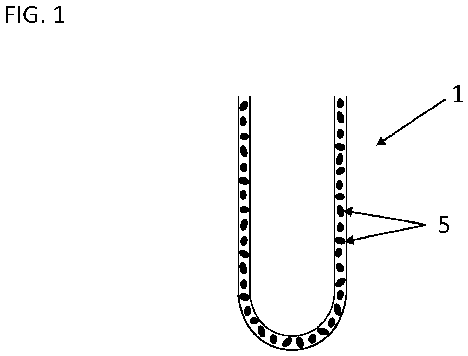

FIG. 1 shows in a sectional view a container 1 comprising an electrical conductor 5 which can be any magnetic material that can be mixed with the material of the container.

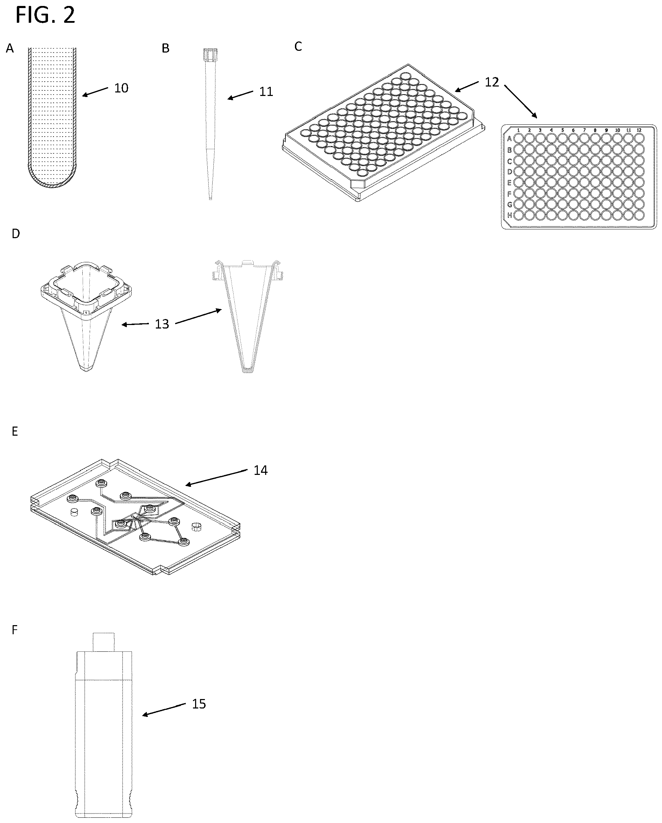

FIG. 2A-F show different types of container. FIG. 2A shows a tube 10, FIG. 2B shows a pipette tip 11, FIG. 2C shows a multi well plate 12, FIG. 2D shows a vessel 13 like a cuvette in a perspective view (left) and a sectional view (right), and FIG. 2E shows a microföuidic device 14.

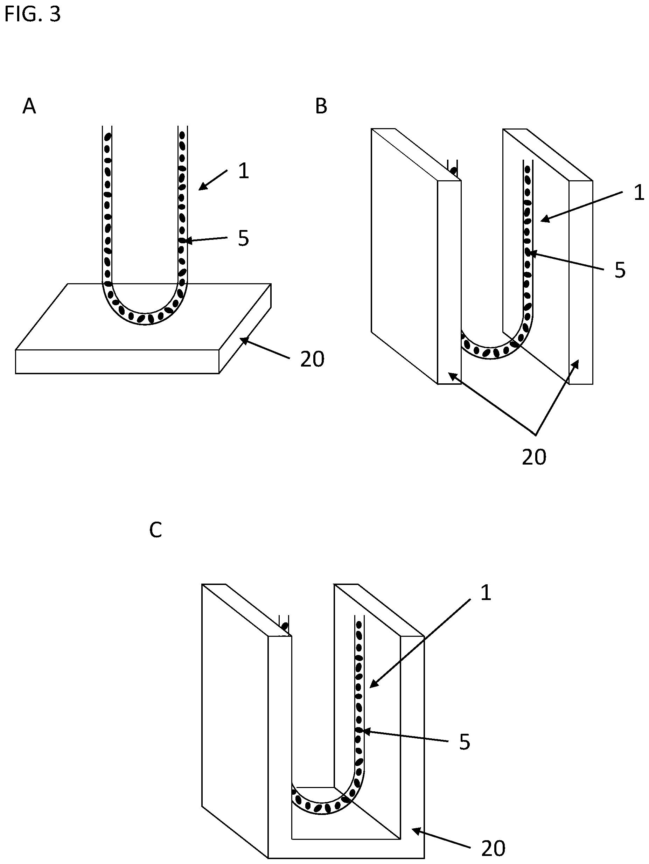

FIG. 3A-C show a container 1 comprising an electrical conductor 5 arranged above (FIG. 3A), between (FIG. 3B), and enclosed at three sides (FIG. 3C) by an inductor 20 producing a changing magnetic field. The container 1 will be heated by applying electrical power to the inductor 20 so that the changing magnetic field is produced.

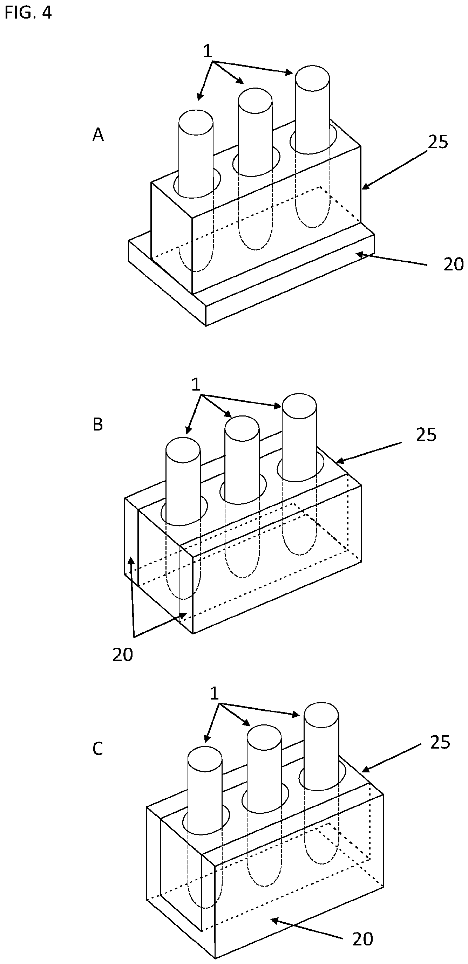

FIG. 4A-C show multiple container1 arranged in a rack 25 which is placed onto an inductor 20 (FIG. 4A). Rack 25 shown in FIG. 4B comprising multiple container 1 is located between two inductor 20, and in FIG. 4C the rack 25 is enclosed at three sides by inductor 20.

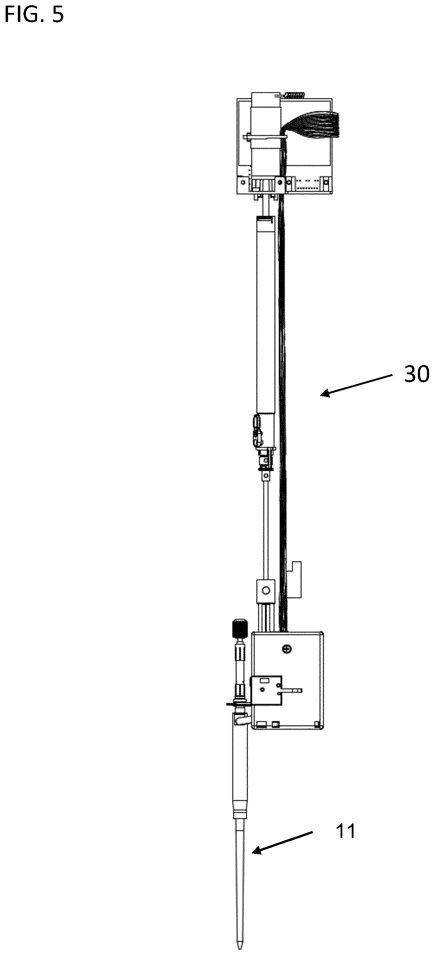

FIG. 5 shows a pipettor 30 carrying a pipette tip 11.

The advantages of the invention can be summarized as follows:
a. Heating is very efficient, as only the component to be heated (receptacles or container like consumables, cuvettes, etc.) is heated. Thus, the invention contributes to energy saving.
b. Exceeding the target temperature will be avoided due to the Curie temperature setting, thus no degradation of sample quality will occur.
c. Tolerances in e.g. cuvette geometry, does not lead to reduced heating ramps and target temperatures, due to unwanted air gaps between conventional heating elements and e.g. a cuvette in the interface.
d. The alternating magnetic field can be generated in different geometries, thus a heating effect can be achieved under completely new aspects. Example: Disposable tip at the pipettor, can be preheated without contact, thus avoiding contamination.
e. Preheating of a container or receptacle prior to adding the sample is possible to an increased target temperature before insertion into the incubator to optimize process times.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### Reference Numerals

- 1: container
- 5: electrical conductor
- 10: tube
- 11: pipette tip
- 12: multi well plate
- 13: vessel
- 14: microfluidic device
- 15: bottle
- 20: inductor
- 25: rack
- 30: pipettor

## Claims

1. A container for processing samples, wherein the container is made of a material comprising electrically conductive particles.

2. The container of claim 1, wherein the container is a tube, a vessel, a pipette tip, a plate with multiple recesses, a microfluidic device or a bottle.

3. The container of claim 1 or 2, wherein the electrically conductive particles are beads of a magnetic metal.

4. A system for processing samples, comprising
- a container according to any one of claims 1 to 3; and
- an inductor configured for applying a changing magnetic field to the container.

5. The system of claim 4, further comprising an element for accommodating the container.

6. The system of claim 5, wherein the element for accommodating the container is a pipette tip or a rack.

7. The system of any one of claims 4 to 6, comprising a plurality of container.

8. The system of claim 7, wherein each container from the plurality of container is arranged next to an inductor.

9. The system of any one of claims 4 to 8, wherein the system is a pipettor.

10. The system according to any one of claims 4 to 8, wherein the system is a thermocycler.

11. A method for heating of a sample in a container, comprising the steps of:
- Applying a sample to a container according to any one of claims 1 to 3;
- Applying the container in an inductor configured for applying a changing magnetic field to the container; and
- Heating of the sample in the container bey applying the changing magnetic field to the container comprising the sample.
